# EUROPEAN PATENT APPLICATION

(11) **EP 2 733 976 A1**
(43) Date of publication of application: **21.05.2014**
(21) Application number: 12810636.6
(22) Date of filing: 13.07.2012
(51) Int. Cl.: H04W 16/20

(54) **SYSTEM, DEVICE, AND METHOD FOR TRANSMITTING MULTI-INPUT-MULTI-OUTPUT SIGNALS**

(30) Priority: 14.07.2011 CN 201110196715; 01.08.2011 CN 201110218430
(71) Applicant: Shenzhen Winhap Communications Inc., Shenzhen, Guangdong 518048 (CN)
(72) Inventor: ZHAO, Ziping, Shenzhen Guangdong 518048 (CN); YANG, Sihuan, Shenzhen Guangdong 518048 (CN); ZHAO, Linghui, Shenzhen Guangdong 518048 (CN)
(74) Representative: Grünecker, Kinkeldey, Stockmair & Schwanhäusser
(86) International application number: PCT/CN2012/078610
(87) International publication number: WO 2013/007213

(57) **Abstract**

Disclosed are a system, device, and method for transmitting multi-input-multi-output signals. The system comprises a feeder distribution system, an active access host, and multiple active access slaves. The system is used for transmitting N routes of uplink/downlink signals. When transmitting the downlink signals, the active access host frequent-converts N-1 routes of downlink signals into signals having different frequencies, then transmits same to the active access slaves via the indoor-distribution system, while the active access slaves revert-frequency-convert then transmit the downlink signals. When transmitting the uplink signals, the active access host frequent-converts the uplink signals then transmits same to the active access slaves via the indoor-distribution system, and the active host revert-frequency-convert the uplink signals then transmits same to a base station or an RRU. N is an integer greater than or equal to 2. The technical solution of the present invention allows for the utilization of a standalone feeder distribution signal for multi-input-multi-output transmission, thus reducing installation costs.

## Description

### Technical Field

The present invention relates to wireless communication technologies, in particular to a method, device, and system for transmitting Multi-Input-Multi-Output (MIMO) signals.

### Technical Background

The MIMO technology is that multiple transmitting antennas are used at a transmitter and multiple receiving antennas are used at a receiver, and radio signals are transmitted and received through multiple antennas at the transmitter and the receiver, thereby improving the quality of service (e.g. a bit error rate or a data rate) of each user. Compared with a traditional Single-Input-Single-Output (SISO) antenna system, a MIMO antenna system can promote a spectrum utilization efficiency, so as to enable the antenna system to transmit a data service with a higher rate over a limited wireless frequency band.

A Long Term Evolution (LTE) technology, which is an evolved version of a 3G mobile communication technology, also introduces the MIMO technology for signal coverage. LTE technologies include a Frequency Division Duplexing (FDD) technology and a Time Division Duplexing (TDD) technology according to their duplexing modes. In the FDD-LTE technology, reception and transmission are performed on two separate symmetrical frequency channels, i.e. a receiving channel and a transmitting channel separated by a guard band. In the FDD technology, frequencies are used in pair to distinguish an uplink from a downlink by frequencies, therefore, resources in a single direction is continuous in time. The FDD technology, when used for supporting symmetrical services, can utilize spectra of uplinks and downlinks efficiently, but suffers from a dramatically reduced spectrum efficiency when it is used for supporting asymmetrical services. On the other hand, the TDD technology separates receiving channels from transmitting channels by time. In a TD-LTE system, different time slots at the same frequency are used as bearers of receiving channels and transmitting channels, thus, resources in a single direction is discontinuous in time, since time resources are distributed in two directions. That is, a base station transmits signals to a mobile station during a certain time period, while the mobile station transmits signals to the base station during another time period, thus the base station and the mobile station must coordinate to operate smoothly.

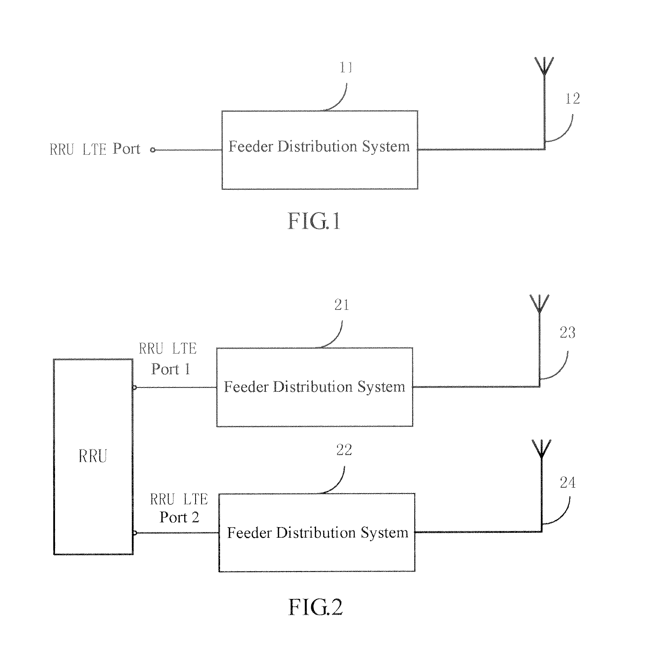

Taking an LTE indoor-distribution system (indoor-distribution) situation as an example, Figure 1 shows the structure of an existing indoor-coverage system only suitable for the SISO technology, as can be seen, a standalone distributing design is used in the prior art, an existing indoor-coverage system is constituted by an indoor signal distribution system (i.e. a feeder distribution system) 11 and a single indoor-coverage antenna 12, so that downlink signals from an LTE Remote RF Unit (RRU) and uplink signals received by the indoor-coverage antenna are both transmitted though the indoor signal distribution system.

The system capacity of the LET system can be significantly promoted by introducing the MIMO antenna technologies into the indoor-coverage system of the LET system. In the case of an indoor-distribution, a higher Signal to Interference plus Noise Ratio (SINR) level can be attained because of a relatively small interference between neighboring cells, and a higher transmission rate can be obtained compared with an SISO antenna system because of various scattering and refracting conditions of an indoor environment. In a dual-branch system formed by the MIMO antenna system, for example, Figure 2 illustrates a system block diagram of an existing dual-branch MIMO indoor-coverage system. As shown in Figure 2, the system comprises two LTE RRU ports respectively connected to two separate indoor signal distribution systems 21 and 22, and the indoor signal distribution systems 21 and 22 are connected to different antennas 23 and 24, respectively. Thereby, dual-branch MIMO reception and transmission for the indoor-coverage is realized by those two separate MIMO channels and the separate antennas 23 and 24.

The MIMO antenna systems in the current LTE system are mostly built by modifying the existing indoor-coverage systems, most of which use an SISO antenna system. Therefore, a construction scheme of the existing dual-branch system comprises the following two approaches, i.e. a first approach and a second approach.

In the first approach, two separate indoor-coverage systems are newly built in the LTE system. An antenna in the dual-branch system may be implemented by two single-polarized antennas or one dual-polarized antenna. However, no matter two single-polarized antennas or one dual-polarized antenna is used, two new feeder distribution systems shall be constructed.

In the second approach, one indoor-coverage system is newly built in the LTE system, and the original indoor-coverage system is used as the other indoor-coverage system through a combiner. That is, even if the original single-polarized antenna is substituted by a dual-polarized antenna, a new feeder distribution system shall be constructed.

Therefore, in the existing construction scheme of the dual-branch system, in despite of which one of the above said two approaches is used, at least one new feeder distribution system shall be constructed and new devices shall be added even though a dual-polarized antenna is used. However, the relatively complicated process for adding at least one new feeder distribution system causes the high construction cost and implementation complexity of the dual-branch system, and the construction cost and implementation complexity of a M-branch MIMO antenna system (where M is an integer larger than 2) would be even higher compared with the dual-branch system.

### Summary of the Invention

The object of the present invention is to provide a system, device, and method for transmitting multi-input-multi-output signals utilizing a standalone feeder distribution system.

The present invention provides a method for transmitting MIMO signals, comprising:

modulating N downlink signals having the same frequency into N downlink signals having different frequencies; and

combining and then sending the N downlink signals having different frequencies obtained from the modulation to the same feeder distribution system for transmitting;
wherein, N is a positive integer not less than 2.

Preferably, the method further comprises:
dividing and then demodulating the N downlink signals having different frequencies transmitted via the feeder distribution system into N signals having the same frequency, which are respectively sent to N array elements in a MIMO antenna array for sending out.

The present invention further discloses a method for transmitting MIMO signals, comprising:
receiving N uplink signals having the same frequency which are respectively sent by N array elements in a MIMO antenna array;
modulating the received N uplink signals having the same frequency into N uplink signals having different frequencies; and
combining and then sending the N uplink signals having different frequencies obtained from the modulation to the same feeder distribution system for transmitting;
wherein, N is a positive integer not less than 2.

Preferably, the method further comprises:
receiving the N uplink signals having different frequencies transmitted via the same feeder distribution system; and
dividing and then demodulating the received N uplink signals having different frequencies into N signals having the same frequency, which are sent to base stations, respectively.

The present invention further discloses a device for transmitting MIMO signals, comprising at least N-1 first frequency-mixing circuits and a multi-band combiner, wherein:

each of the first frequency-mixing circuits is configured to modulate one of N downlink signals having the same frequency which are sent by base stations, to obtain N downlink signals different in frequency after the modulation by the first frequency-mixing circuits;

the multi-band combiner is configured to combine and then send the N downlink signals having different frequencies obtained after the modulation by the at least N-1 first frequency-mixing circuits to the same feeder distribution system for transmitting;
wherein, N is a positive integer not less than 2.

The present invention further discloses a device for transmitting MIMO signals, comprising at least N-1 second frequency-mixing circuits and a multi-band combiner, wherein:
the multi-band combiner is configured to receive and then divide N uplink signals having different frequencies transmitted via the same feeder distribution system, and send at least N-1 of the divided N uplink signals having different frequencies to the respective ones of the at least N-1 second frequency-mixing circuits;
each second frequency-mixing circuit is configured to demodulate one uplink signal sent by the multi-band combiner and to deliver the demodulated uplink signal to a base station, wherein N uplink signals obtained after the demodulation by the various second frequency-mixing circuits have the same frequency;
wherein, N is a positive integer not less than 2.

The present invention further discloses a device for transmitting MIMO signals, comprising at least N-1 first frequency-mixing circuits and a multi-band combiner, wherein:
the multi-band combiner is configured to receive and then divide the N downlink signals having different frequencies transmitted via the same feeder distribution system, and send at least N-1 of the divided N downlink signals having different frequencies to the respective ones of the at least N-1 first frequency-mixing circuits;
each first frequency-mixing circuit is configured to demodulate one of downlink signals sent by the multi-band combiner and to deliver the demodulated downlink signal to one array element in a MIMO antenna array, wherein N downlink signals obtained after the demodulation by the various first frequency-mixing circuits have the same frequency;
wherein, N is a positive integer not less than 2.

The present invention further discloses a device for transmitting MIMO signals, comprising at least N-1 second frequency-mixing circuits and a multi-band combiner, wherein:

each second frequency-mixing circuit is configured to modulate one of N uplink signals having the same frequency which are sent by an array element in a MIMO antenna array, to obtain N uplink signals different in frequency from the modulation by the various second frequency-mixing circuits;

the multi-band combiner is configured to combine and then send the N uplink signals having different frequencies obtained after the modulation by the at least N-1 second frequency-mixing circuits to the same feeder distribution system for transmitting;
wherein, N is a positive integer not less than 2.

The present invention further discloses a device for transmitting MIMO signals, comprising N-1 host frequency-converting modules and a multi-band combiner-divider;
the host frequency-converting module is configured to frequency-convert a downlink signal inputted from a corresponding RRU port into a signal having a frequency different from that of every other downlink signal and transmit the frequency-converted downlink signal to the multi-band combiner-divider; and further configured to reversedly frequency-convert an uplink signal from the multi-band combiner-divider and having a frequency different from that of every other uplink signal into a signal having the same frequency so as to be transmitted to the RRU port;
wherein, different host frequency-converting modules correspond to different frequency-converting frequencies, output frequency-converted downlink signals having different frequencies, and process uplink signals having different frequencies;
the multi-band combiner-divider is configured to combine N-1 downlink signals having different frequencies and a downlink signal not subjected to frequency-conversion into one signal to be inputted to a feeder distribution system so as to be transmitted to an active access slave, and further configured to divide uplink signals from the feeder distribution system according to frequencies, and then output the divided uplink signals to corresponding host frequency-converting modules for processing;
wherein, N is a positive integer not less than 2.

The present invention further discloses a device for transmitting MIMO signals, comprising a multi-band combiner-divider, N-1 slave frequency-converting modules and N antennas;
wherein, each slave frequency-converting module corresponds to a distinct signal frequency;
the multi-band combiner-divider is configured to divide signals from the feeder distribution system according to frequencies and then output the divided signals to corresponding slave frequency-converting modules for processing, and further configured to combine uplink signals from N-1 slave frequency-converting modules with an uplink signal from an antenna, which have different frequencies, into one signal to be outputted to a radio frequency distribution system for transmitting;
the slave frequency-converting module is configured to reversedly frequency-convert downlink signals from the multi-band combiner-divider, which are different from each other in frequency, into downlink signals having the same transmitting frequency to be transmitted by an antenna (53), and further configured to frequency-convert uplink signals having the same frequency received by the antenna into corresponding uplink signals which are different from each other in frequency, which are transmitted to the multi-band combiner-divider for combining;
wherein, N is a positive integer not less than 2 device for transmitting MIMO signals, comprising a multi-band combiner-divider, N-1 slave frequency-converting modules and N antennas;
wherein, each slave frequency-converting module corresponds to a distinct signal frequency;
the multi-band combiner-divider is configured to divide signals from the feeder distribution system according to frequencies and then output the divided signals to corresponding slave frequency-converting modules for processing, and further configured to combine uplink signals from N-1 slave frequency-converting modules with an uplink signal from an antenna, which have different frequencies, into one signal to be outputted to a radio frequency distribution system for transmitting;
the slave frequency-converting module is configured to reversedly frequency-convert downlink signals from the multi-band combiner-divider, which are different from each other in frequency, into downlink signals having the same transmitting frequency to be transmitted by an antenna (53), and further configured to frequency-convert uplink signals having the same frequency received by the antenna into corresponding uplink signals which are different from each other in frequency, which are transmitted to the multi-band combiner-divider for combining;
wherein, N is a positive integer not less than 2.

The present invention further discloses a system for transmitting MIMO signals, comprising a feeder distribution system, an active access host connected to base stations and the feeder distribution system, and an active access slave connected to the feeder distribution system and a MIMO antenna array, wherein:
the active access host is configured to modulate N downlink signals having the same frequency sent by base stations into N downlink signals having different frequencies, and combine and then send the N downlink signals having different frequencies obtained from the modulation to the feeder distribution system for transmitting; and further configured to receive the N uplink signals having different frequencies transmitted via the same feeder distribution system, divide and then demodulate the received N uplink signals having different frequencies into N uplink signals having the same frequency, and deliver the N uplink signals having the same frequency obtained after the demodulation to base stations;
the feeder distribution system is configured to transmitting signals between the active access host and the active access slave;
the active access slave is configured to receive the N downlink signals having different frequencies transmitted via the feeder distribution system, divide and then demodulate the N downlink signals having different frequencies into N downlink signals having the same frequency, and deliver the N downlink signals having the same frequency obtained after the demodulation to different array elements in a MIMO antenna array, respectively; and further configured to modulate N uplink signals having the same frequency received by N array elements in the MIMO antenna array into N uplink signals having different frequencies, and combine and then send the N uplink signals having different frequencies to the feeder distribution system for transmitting;
wherein, N is a positive integer not less than 2.

The present invention, which is based on an LTE network, simply and easily implements the FDD-LTE MIMO technology and TD-LTE MIMO technology to fully take advantage of the LTE technology, by adding an active access host to the existing indoor-coverage system and substituting an original indoor-coverage antenna by an active access slave without making any change to the cabling of the existing indoor-coverage system, thereby significantly improving the quality of an indoor signal distribution and reducing the construction cost.

### Description of Drawings

Figure 1 is a system block diagram of an indoor signal distribution system based on an SISO technology in the prior art;
Figure 2 is a system block diagram of an indoor signal distribution system based on a dual-branch MIMO technology in the prior art;
Figure 3 is a system block diagram of a MIMO signal transmission system according to a first embodiment of the present invention;
Figure 4 is a block diagram of an active access host in the MIMO signal transmission system according to the first embodiment of the present invention;
Figure 5 is a block diagram of an active access slave in the MIMO signal transmission system according to the first embodiment of the present invention;
Figure 6 is a block diagram of an active access host of a MIMO signal transmission system based on TD-LTE according to a second embodiment of the present invention;
Figure 7 is a block diagram of an active access slave of a MIMO signal transmission system based on TD-LTE according to a second embodiment of the present invention;
Figure 8 is a system block diagram of a dual-branch MIMO signal transmission system based on FDD-LTE provided in a third embodiment of the present invention;
Figure 9 is a flow chart of a downlink MIMO signal transmission method provided in a fourth embodiment of the present invention; and
Figure 10 is a flow chart of an uplink MIMO signal transmission method according to a fourth embodiment of the present invention.

### Detailed description of the Preferred Embodiments

Technical solutions of the present invention will be described further in conjunction with accompanying drawings and embodiments.

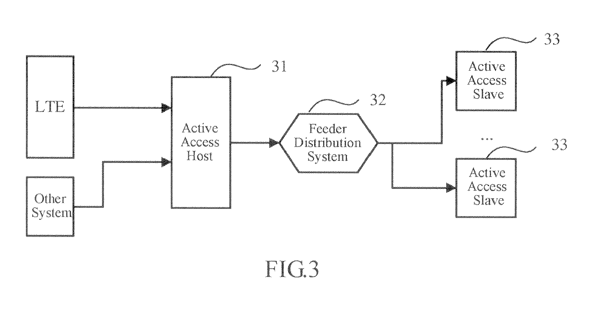

Figure 3 is a system block diagram of a MIMO signal transmission system according to a first embodiment of the present invention. As shown in Figure 3, the MIMO signal transmission system includes a feeder distribution system 32, an active access host 31 connected to both a base station and the feeder distribution system, and active access slaves 33 connected to both the feeder distribution system 32 and a MIMO antenna array. The active access slave 33 functions as an indoor-distribution antenna in an original system, and thus is also called as an active antenna 33 herein.

The active access host 31 is configured to modulate N downlink signals having the same frequency sent from the base stations into N downlink signals having different frequencies, which are then combined and sent to the feeder distribution system for transmitting; and the active access host 31 is further configured to receive N uplink signals having different frequencies transmitted via the feeder distribution system, divide and then demodulate the received N uplink signals having different frequencies into N uplink signals having the same frequency, and deliver the N uplink signals having the same frequency obtained by demodulation to RRUs to be delivered to the base stations by the RRUs.

The feeder distribution system 32 is configured to transmit signals between the active access host and the active access slave.

The active access slave 33 is configured to receive N downlink signals having different frequencies transmitted via the feeder distribution system, divide and then demodulate the N downlink signals having different frequencies into N downlink signals having the same frequency, and deliver the N downlink signals having the same frequency obtained by the demodulation to different array elements in a MIMO antenna array, respectively; and the active access slave 33 is further configured to modulate N uplink signals having the same frequency received by N array elements in the MIMO antenna array into N uplink signals having different frequencies, and combine and then send the N uplink signals having different frequencies to the feeder distribution system for transmitting, where N is a positive integer not less than 2.

The active access host further includes a synchronization unit and a synchronization sending unit.

The synchronization unit is configured to acquire a synchronization signal and synchronously begin processing of uplink signals or downlink signals of the active access host according to the acquired synchronization signal.

The synchronization sending unit is configured to send the synchronization signal acquired by the synchronization unit to the active access slave.

The active access host further includes a synchronization receiving unit.

The synchronization receiving unit is configured to receive the synchronization signal sent by the active access host and synchronously begin processing of uplink signals or downlink signals of the active access slave according to the acquired synchronization signal.

The active access host further includes a local oscillator unit and a local oscillator sending unit.

The local oscillator unit is configured to acquire a local oscillator signal, which is used as a frequency reference of the active access host for signal modulating and demodulating.

The local oscillator sending unit is configured to send the local oscillator signal acquired by the local oscillator unit to the active access slave.

The active access slave further includes a local oscillator receiving unit.

The local oscillator receiving unit is configured to receive the local oscillator signal sent by the active access host, which is then used as a frequency reference of the active access slave for signal modulating and demodulating.

In this embodiment, both the active access host and the active access slave can be connected to the feeder distribution system through a standard N-type radio frequency port.

The signals delivered to the active access host may be from a TD-LTE system, or a FDD-LTE system, or any other mobile communication systems supporting MIMO technologies, such as a GSM, TD-SCDMA, CDMA, or WCDMA system.

In this embodiment, the system may include one active access host, one feeder distribution system and multiple active access slaves.

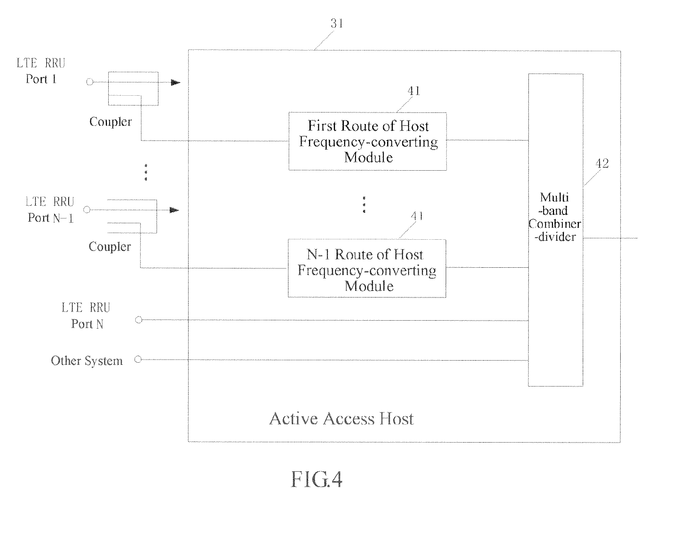

Figure 4 is a block diagram of an active access host in the MIMO signal transmission system according to the first embodiment of the present invention. As shown in Figure 4, the active access host 31 may include at least N-1 host frequency-converting modules 41 and a multi-band combiner-divider 42.

The host frequency-converting module 41 is configured to frequency-convert a downlink signal inputted from a corresponding LTE RRU port into an RF signal having a frequency different from that of any other signals and transmit the RF signal to the multi-band combiner-divider; and is further configured to frequency-convert an uplink signal from the multi-band combiner-divider into an RF signal having a frequency acceptable to the corresponding LTE RRU port and send the RF signal to the LTE RRU port. Different host frequency-converting modules correspond to different frequency-converting frequencies and output downlink signals having different frequencies. Therefore, the N-1 host frequency-converting modules 41 modulates the N-1 signals having the same frequency from LTE RRU ports 1 to N-1 into N-1 downlink signals having different frequencies, which, together with a signal that is outputted by an LTE RRU port N and not frequency-converted, constitute N downlink signals having different frequencies to be inputted to the multi-band combiner-divider 42. In this embodiment, a downlink signal of another system may also be inputted to the multi-band combiner-divider 42 as one separate branch.

The multi-band combiner-divider 42 is configured to combine N downlink signals having different frequencies into one signal, which is inputted to the feeder distribution system to be transmitted to the active access slave; and is further configured to divide an uplink signal from the feeder distribution system by frequencies, and output uplink signals obtained from the division to corresponding host frequency-converting modules 41 for processing.

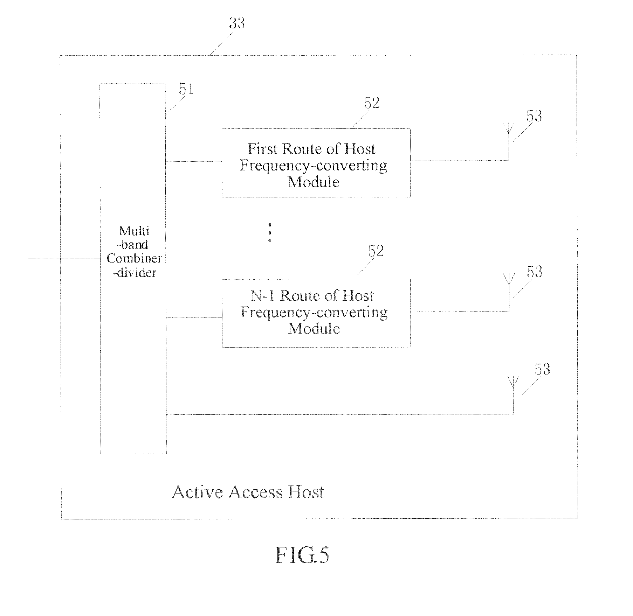

Figure 5 is a block diagram of an active access slave in the MIMO signal transmission system according to the first embodiment of the present invention. Figure 5 shows the active access slave 33.

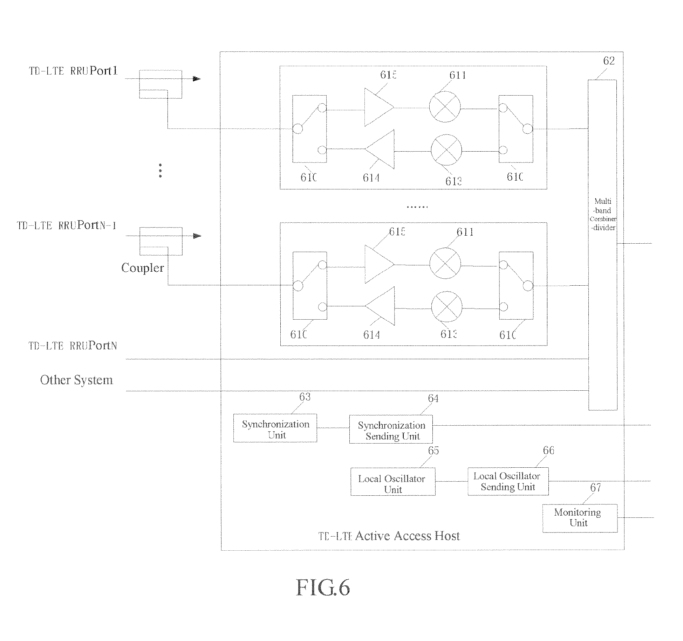

Figure 6 is a block diagram of an active access host of a MIMO signal transmission system based on TD-LTE according to a second embodiment of the present invention. As shown in Figure 6 which takes a TDD MIMO-based signal from the TD-LTE system as an example, an RRU port is used to transmit a signal and a coupler is used to attenuate the signal to be transmitted in the TD-LTE system. Of course, as shown in Figure 3, signals transmitted in the feeder distribution system may also come from other systems which may be any mobile communication systems, such as the Global System of Mobile communication (GSM), Time division-Synchronous Code Division Multiple Access (TD-SCDMA), Code Division Multiple Access (CDMA), or Wideband Code Division Multiple Access (WCDMA) system. However, since various systems use different frequencies, signals obtained from the frequency-conversion performed on the at least N-1 signals having the same frequency to be transmitted in the TD-LTE system may be synchronously combined with signals from the various systems at the multi-band combiner. The active access host may include at least N-1 first frequency-mixing circuits 611 and a multi-band combiner 612.

Each of the first frequency-mixing circuits 611 is configured to modulate one of N downlink signals having the same frequency which are sent by base stations via the RRUs, to obtain N downlink signals different in frequency after the modulation by the various first frequency-mixing circuits. The multi-band combiner 612 is configured to combine and send the N downlink signals having different frequencies obtained after the modulation of the at least N-1 first frequency-mixing circuits to the same feeder distribution system for transmitting, where N is a positive integer not less than 2.

The inventive device further includes at least N-1 second amplifiers 615. Each of the first frequency-mixing circuits 611 is connected to the RRU through one of the second amplifiers 615.

Each of the second amplifiers 615 is configured to amplify one of the N downlink signals having the same frequency sent by the base stations, to maintain constant power of the downlink signal.

Each of the first frequency-mixing circuits 611 is particularly configured to modulate the downlink signal processed by its connected second amplifier 615.

The inventive device further includes at least N-1 second frequency-mixing circuits 613.

The multi-band combiner 62 is further configured to receive and then divide the N uplink signals having different frequencies transmitted via the same feeder distribution system, and send at least N-1 of the divided N uplink signals having different frequencies to the respective ones of the at least N-1 second frequency-mixing circuits.

Each of second frequency-mixing circuits 613 is configured to demodulate one of the uplink signals sent by the multi-band combiner and deliver the demodulated uplink signal to a base station, where N uplink signals obtained from the demodulation of the various second frequency-mixing circuits have the same frequency.

The inventive device further includes at least N-1 first amplifiers 614. Each of the second frequency-mixing circuits 613 is connected to the RRU through one of the first amplifiers 614.

Each of the first amplifiers 614 is configured to amplify the uplink signal modulated by its connected second frequency-mixing circuit and deliver the amplified uplink signal to the RRU.

The inventive device further includes at least 2N-2 high speed switches 610, which are connected to both ends of downlink signal frequency-converting links each composed of the first frequency-mixing circuit 611 and the second amplifier 615 and to both ends of uplink signal frequency-converting links each composed of the second frequency-mixing circuit 613 and the first amplifier 614. Because the TD-LTE realizes a duplex transmission of uplink and downlink signals by means of time division duplexing, the high speed switches 610 are configured to switch according to time slots occupied by uplink and downlink signals, so that the uplink signals and downlink signals are respectively introduced to corresponding uplink signal frequency-converting links and downlink signal frequency-converting links for frequency-converting.

The inventive device further includes a synchronization unit 63.

The synchronization unit 63 is configured to acquire a synchronization signal and synchronously begin processing of uplink or downlink signals of the inventive device according to the acquired synchronization signal.

Each of the first frequency-mixing circuits 611 is configured to synchronously begin modulating one of the N downlink signals having the same frequency sent from base stations, according to the synchronization signal.

Each of the second frequency-mixing circuits 613 is configured to synchronously begin demodulating one of the uplink signals sent by the multi-band combiner, according to the synchronization signal.

The inventive device further includes a synchronization sending unit 64.

The synchronization sending unit 64 is configured to send the synchronization signal acquired by the synchronization unit to other MIMO signal transmission devices.

Alternatively, the synchronization sending unit 64 is particularly configured to modulate the synchronization signal acquired by the synchronization unit and then send the modulated synchronization signal to other MIMO signal transmission devices.

The inventive device further includes a local oscillator unit 65.

The local oscillator unit 65 is configured to acquire a local oscillator signal, which is used as a frequency reference of the device for signal modulating and demodulating.

Each of the first frequency-mixing circuits 611 is particularly configured to modulate one of the N downlink signals having the same frequency sent by base stations, by using the local oscillator signal as a frequency reference for signal modulating.

Each of the second frequency-mixing circuits 613 is particularly configured to synchronously begin demodulating one of the uplink signals sent by the multi-band combiner, by using the local oscillator signal as a frequency reference for signal demodulating.

The inventive device further includes a local oscillator sending unit 66.

The local oscillator sending unit 66 is configured to send the local oscillator signal acquired by the local oscillator unit to other MIMO signal transmission devices.

Alternatively, the local oscillator sending unit 66 is particularly configured to send the local oscillator signal acquired by the local oscillator unit to other MIMO signal transmission devices after amplifying the local oscillator signal.

As shown in Figure 6, the inventive device further includes a monitoring unit 67, which is connected with a uniform network management platform and has an interface for reporting various monitor information of related devices and an interface for receiving control commands assigned by the uniform network management platform to configure the related devices accordingly.

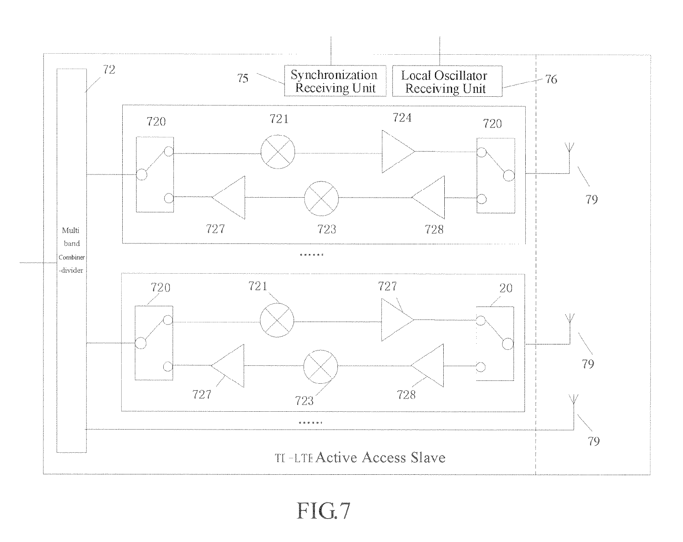

Figure 7 is a block diagram of an active access slave of a MIMO signal transmission system based on TD-LTE according to a second embodiment of the present invention. As shown in Figure 7, the inventive device further includes at least N-1 first frequency-mixing circuits 721 and a multi-band combiner 722.

The multi-band combiner 722 is configured to receive and then divide N downlink signals having different frequencies transmitted via the same feeder distribution system, and send at least N-1 of the divided N downlink signals having different frequencies to the respective ones of the at least N-1 first frequency-mixing circuits. Each first frequency-mixing circuit 721 is configured to demodulate one of downlink signals sent by the multi-band combiner, and deliver the demodulated downlink signal to an array element in a MIMO antenna array, where N downlink signals obtained from the demodulation of the various first frequency-mixing circuits have the same frequency, and N is a positive integer not less than 2.

The inventive device further includes at least N-1 first power amplifiers 724. Each first frequency-mixing circuit 721 is connected to one array element in a MIMO antenna array through s first power amplifier 724.

Each of the first power amplifiers 724 is configured to amplify a downlink signal demodulated by its connected first frequency-mixing circuit and deliver the amplified downlink signal to the array element in a MIMO antenna array.

The inventive device further includes at least N-1 second frequency-mixing circuits 723.

Each second frequency-mixing circuit 723 is configured to modulate one of N uplink signals having the same frequency which are sent by the array element in a MIMO antenna array, and N uplink signals obtained from the modulation of the various second frequency-mixing circuits are different in frequency.

The multi-band combiner 733 is further configured to combine and then send the N uplink signals having different frequencies obtained from the modulation by the at least N-1 second frequency-mixing circuits to the same feeder distribution system for transmitting.

The inventive device further includes at least N-1 low-noise amplifiers 728. Each second frequency-mixing circuit 723 is connected to one array element in a MIMO antenna array through a low-noise amplifier 728.

Each low-noise amplifier 723 is configured to amplify one uplink signal received from its connected antenna array element, to adjust the power of the uplink signal to a preset value.

Each second frequency-mixing circuit 723 is particularly configured to modulate the uplink signal processed by its connected low-noise amplifier.

The inventive device further includes at least N-1 second power amplifiers 727. Each second frequency-mixing circuit 723 is connected to the multi-band combiner through a second power amplifier 727.

Each second power amplifier 727 is configured to amplify an uplink signal obtained from the modulation by its connected second frequency-mixing circuit. A power difference between any two of the N uplink signals having different frequencies that are respectively amplified by the various second power amplifiers is less than a preset value.

The multi-band combiner 722 is configured to combine and then send the N uplink signals having different frequencies that are obtained after the amplification by the at least N-1 second power amplifiers to the same feeder distribution system for transmitting.

In this embodiment, the low-noise amplifier and the second power amplifier are used for power adjustment in combination and an output power is adjusted through gain adjustment within a defined gain range, so that the power difference between any two of the N adjusted signals is less than the preset value.

The MIMO antenna array 729 may be integrated into the device. The array element in the MIMO antenna array may be realized by multiple antennas or be integrated into a single antenna.

The inventive device and other MIMO signal transmission devices may acquire the synchronization signal from the same predetermined synchronization signal source. In particular, the inventive device may further include a synchronization receiving unit 725.

The synchronization receiving unit 725 is configured to receive a synchronization signal sent by other MIMO signal transmission device and synchronously begin processing of uplink or downlink signals of the inventive device according to the synchronization signal.

The synchronization receiving unit 725 is particularly configured to receive and demodulate the synchronization signal sent by other MIMO signal transmission device and synchronously begin processing of uplink or downlink signals of the inventive device according to the demodulated synchronization signal.

Each of the first frequency-mixing circuits 721 is particularly configured to synchronously begin modulating one of downlink signals sent by the multi-band combiner, by utilizing the synchronization signal.

Each of the second frequency-mixing circuits 723 is configured to synchronously begin modulating one of N uplink signals having the same frequency which are sent by the array element in the MIMO antenna array, by utilizing the synchronization signal.

The inventive device and other MIMO signal transmission devices may acquire the local oscillator signal from the same predetermined local oscillator signal source. In particular, the inventive device may further include a local oscillator receiving unit 726.

The local oscillator receiving unit 726 is configured to receive a local oscillator signal sent by the other MIMO signal transmission device and use the local oscillator signal as a frequency reference of the inventive device for signal modulating and demodulating.

The local oscillator receiving unit 726 is particularly configured to receive, filter and then amplify the local oscillator signal sent by the other MIMO signal transmission device, and use the amplified local oscillator signal as a frequency reference of the inventive device for signal modulating and demodulating.

Each of the first frequency-mixing circuits 721 is particularly configured to demodulate one downlink signal sent by the multi-band combiner, by utilizing the local oscillator signal as a frequency reference for signal demodulating.

Each of the second frequency-mixing circuits 723 is configured to modulate one of N uplink signals having the same frequency which are sent by the array element in the MIMO antenna array, by utilizing the local oscillator signal as a frequency reference for signal modulating.

As shown in Figure 7, the MIMO antenna array may be embedded in the device of the fourth embodiment of the present invention. The size of device with the embedded MIMO antenna array may be equivalent to that of a traditional MIMO antenna. Of course, the MIMO antenna array and the inventive device may be disposed separately depending on situations, as shown by the broken line in Figure 7.

As shown in Figure 7, the synchronous beginning of the processing on the uplink or downlink signal is realized by an uplink/downlink switch 720 (like the uplink/downlink switch 10 shown in Figure 6). The arrangement of the uplink/downlink switches is not limited to the case where two uplink/downlink switches are used to control the switch between one first frequency-mixing circuit and one second frequency-mixing circuit as shown in Figure 6 or 7, alternatively, it is possible for two uplink/downlink switches to control the switch between all N first frequency-mixing circuits and all N second frequency-mixing circuits.

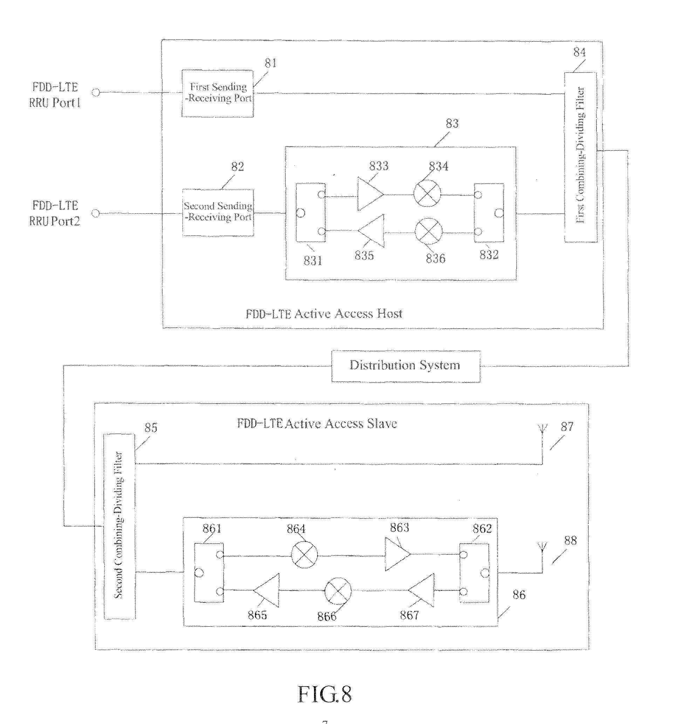

Figure 8 is a system block diagram of a dual-branch MIMO signal transmission system based on FDD-LTE provided by a third embodiment of the present invention. Only parts relevant to the third embodiment are shown for convenience.

In this embodiment, frequency-converting modules in the active access host and the active access slave of the first embodiment are further illustrated in detail based on FDD-LTE technologies. As shown in Figure 8, the system includes an FDD-LTE active access host, a distribution system, and an FDD-LTE active access slave. The FDD-LTE indoor-coverage system is provided with a first transmission line and a second transmission line for transmitting uplink and downlink signals simultaneously. The first transmission line is a signal transmission line of an original indoor-coverage system, i.e., a transmission line formed by "an information source end <-> an indoor-distribution system <-> an indoor-coverage antenna"; but signals transmitted in the second transmission line are physically isolated from signals transmitted in the first transmission line by the frequency-conversion processing added in the module of the indoor-coverage system of this embodiment, thus realizing the simultaneous input and output of two signals.

In particular, in addition to the original distribution system, the indoor-coverage system further includes:
an active access host which is connected to one end of the distribution system; and
an active access slave which is connected to the other end of the distribution system and used for substituting the original indoor-coverage antenna, and the active access slave has a size equivalent to that of the traditional indoor-coverage antenna for system compatibility.

Both the active access host and the active access slave include the first transmission line and the second transmission line. The active access host and the active access slave are used for transmitting uplink and downlink signals in parallel. When transmitting the downlink signals, the active access host frequency-converts one of the downlink signals and then transmits the signal via the indoor-distribution system to the active access slave, which reversedly frequency-converts and then transmits the frequency-converted downlink signal. When transmitting the uplink signals, the active access slave frequency-converts one of the uplink signals and then transmits the frequency-converted uplink signal to the active access host via the indoor-distribution system, and the active host reversedly frequency-converts and then transmits the uplink signal to the RRU.

The active access host includes a first transceiving port 81, a second transceiving port 82, a first frequency-converting module 83, and a first combining-dividing filter 84.

The first transceiving port 81 and the second transceiving port 82 are independent of each other and configured to receive in parallel two downlink signals from FDD-LTE RRU ports I and 2 at the information source end, respectively, and also configured to send in parallel two local uplink signals to corresponding FDD-LTE RRU ports at the information source end.

The first frequency-converting module 83, which is connected between the second transceiving port 82 and the first combining-dividing filter 84, frequency-converts downlink signals in the second transmission line and reversedly frequency-converts uplink signals in the second transmission line, in order to physically isolate parallel uplink and downlink signals in the active access host.

The first transceiving port 81 is directly connected to first combining-dividing filter 84, which is configured to combine, filter and then send two parallel transmitted downlink signals to the distribution system, and also configured to divide and filter an uplink signal from the distribution system to generate two uplink signals to be sent to the first frequency-converting module 83 and the first transceiving port 81, respectively.

The active access slave (which may also be called as active antenna) includes a first antenna 87, a second antenna 88, a second frequency-converting module 85, and a second combining-dividing filter 86.

The first antenna 87 and the second antenna 88 are independent of each other and configured to transmit two uplink signals, respectively, and also to receive two signals to be transmitted upward, respectively.

The second frequency-converting module 86, which is connected between the second antenna 88 and the second combining-dividing filter 85, reversedly frequency-converts downlink signals in the second transmission line which are frequency-converted by the first frequency-converting module 83, and frequency-converts uplink signals in the second transmission line, in order to physically isolate parallel uplink and downlink signals in the active access slave.

The first antenna 87 is directly connected with the second combining-dividing filter 85, which is configured to combine, filter and then send two parallel transmitted uplink signals to the distribution system, and also to divide and filter a downlink signal from the distribution system to generate two downlink signals to be sent to the first antenna 87 and the second frequency-converting module 86, respectively.

Particular structures of the active access host and the active access slave are further described as below.

The first frequency-converting module 83 of the active access host includes a first frequency-converting circuit, a second frequency-converting circuit, and a first duplexer 831 and a second duplexer 832 respectively connected to both ends of the first and second frequency-converting circuits. Because the frequency division duplexing technology is used in the FDD-LTE for implementing duplex communication, that is, uplink signals and downlink signals of the FDD-LTE use different carrier frequencies, duplexers are used to distinguish uplink signals from downlink signals.

The first frequency-converting circuit formed by a first amplifier 833 and a first frequency-mixing circuit 834 is configured to frequency-convert downlink signals, in order for physical isolation from two parallel downlink signals in the first transmission line.

The second frequency-converting circuit formed by a second frequency-mixing circuit 836 and a second amplifier 835 is configured to reversedly frequency-convert and then transmit the frequency-converted uplink signals from the feeder distribution system in the second transmission line to the second transceiving port 82 for sending.

The first duplexer 831 and a second duplexer 832 are respectively connected to both ends of the first and second frequency-converting circuits and are configured to send the downlink signals to the first frequency-converting circuit and send the uplink signals to the second frequency-converting circuit according to signal frequencies.

Meanwhile, the second frequency-converting module in the active access slave comprises a third frequency-converting circuit, a fourth frequency-converting circuit, and a third duplexer 861 and a fourth duplexer 862 connected to both ends of the third and fourth frequency-converting circuits.

The third frequency-converting circuit is formed by a third frequency-mixing circuit 864 and a third amplifier 863 and is configured to reversedly frequency-convert and then transmit outward through the second antenna 88 downlink signals which have been frequency-converted by the first frequency-converting circuit.

The fourth frequency-converting circuit is formed by a low-noise amplifier 867, a fourth frequency-mixing circuit 866 and a fourth amplifier 865 is configured to frequency-convert uplink signals received by the second antenna 88, in order to physically isolate two parallel uplink signals in the first transmission line.

The third duplexer 861 and the fourth duplexer 862 are respectively connected to both ends of the third frequency-converting circuit and the fourth frequency-converting circuit, and configured to send the downlink signals to the third frequency-converting circuit and send the uplink signals to the fourth frequency-converting circuit according to signal frequencies.

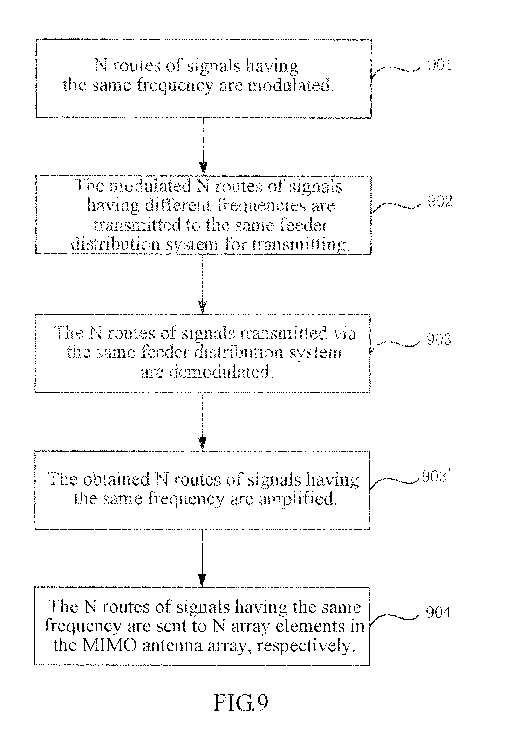

Figure 9 is a flow chart of a downlink MIMO signal transmission method provided by a fourth embodiment of the present invention. Downlink signal transmission, i.e. signal transmission from a base station to a MIMO antenna array for the base station is illustrated in Figure 9 as an example. As shown in Figure 9, the method include following steps 901-904.

In step 901, N signals having the same frequency are modulated.

In downlink transmissions of signals, the N signals having the same frequency may be sent by the base stations.

Subjects performing this step may be various devices such as an amplifier. In particular, in this step, at least N-1 of the N signals having the same frequency may be modulated. Of course, all the N signals having the same frequency may be modulated to obtain N signals having different frequencies, where N is a positive integer not less than 2.

Because frequency-converting technologies are required to be realized over low-power signals, the at least N-1 signals having the same frequency sent by the base stations may be attenuated by couplers, so that the power of the attenuated signals meets requirements of frequency-converting technologies. Of course, other devices such as a fixed attenuator or an adjustable attenuator can also be used to attenuate the at least N-1 signals having the same frequency sent by the base stations, so that power of the attenuated signals meet requirements of frequency-converting technologies.

Preferably, in order to maintain power of signals constant when modulating the signals, an amplifier stage may be disposed to adjust the signals to ensure constant power of the signals for modulating.

In step 902, the modulated N signals having different frequencies are transmitted to the same feeder distribution system for transmitting.

The modulated N signals having different frequencies may be the N signals having different frequencies obtained in the step 901 by modulating N signals having the same frequency, or may be N-1 signals obtained by modulating N-1 signals having the same frequency plus one un-modulated signal. Of course, the modulated N-1 signals and the un-modulated signal are different in frequency.

The N signals obtained after the modulation, which have different frequencies, can be combined and then transmitted via the same feeder distribution system.

In step 903, the N signals transmitted via the same feeder distribution system are demodulated.

Subjects performing this step may be various devices such as an amplifier.

Before sending the N signals transmitted via the feeder distribution system to N array elements in the MIMO antenna array, the N signals transmitted via the feeder distribution system should be demodulated using a demodulating method corresponding to the modulating method in the step 901.

If N-1 signals are modulated in the step 901, then in this step 903, the N-1 signals should be demodulated, and the demodulated N-1 signals plus one signal not subjected to modulation and demodulation are used as the demodulated N signals. Of course, the demodulated N- I signals and the one signal not subjected to modulation and demodulation have the same frequency.

In order to guarantee precision of the demodulation and reduce frequency errors, the same local oscillator signal is used for both the demodulation and the modulation. In particular, in embodiments of the present invention, a device for the modulation may be provided with a local oscillator unit, the local oscillator signal of which is used as a frequency reference for frequency-converting operations. After being amplified and filtered, the local oscillator signal acquired by the local oscillator unit is delivered through cables of the feeder distribution system to the device for the demodulation which may filter, amplify, and then use the received local oscillator signal as the frequency reference for frequency-converting operations.

In step 904, the N signals having the same frequency are sent to N array elements in the MIMO antenna array, respectively.

After the N signals having the same frequency are obtained through demodulation, the N signals having the same frequency can be sent to N array elements in the MIMO antenna array, respectively. Consequently, signal transmission over the MIMO antenna system is realized using one feeder distribution system.

Preferably, a step 903' is further included between the steps 903 and 904.

In the step 903', the obtained N signals having the same frequency are amplified.

Because frequency-converting technologies are required to be realized over low-power signals, the demodulated signals may be amplified in order to guarantee power of signals received by the N array elements in the MIMO antenna array. In particular, when demodulating the N-1 signals, N-1 signals having the same frequency which are obtained after frequency-converting the N-1 signals may be amplified; and in the step 104, the amplified N-1 signals and one unamplified signal are sent to N array elements in the MIMO antenna array, respectively.

As a supplement of the third embodiment of the present invention, a local oscillator signal generator is also designed in the active access host. After generating a local oscillator signal, the local oscillator signal generator sends the local oscillator signal to the active access slave, and the local oscillator signal is used by frequency-mixing circuits in both the active access host and the active access slave, thus avoiding frequency differences caused by traditional design schemes where a local oscillator signal generator is designed in each of the active access host and the active access slave and significantly simplifying circuits of the active access slave.

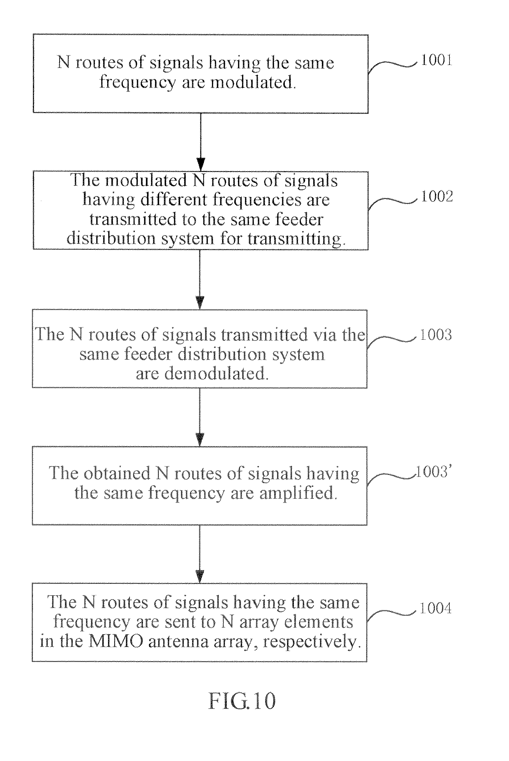

Figure 10 is a flow chart of an uplink MIMO signal transmission method according to a fourth embodiment of the present invention. Uplink signal transmission, i.e. signal transmission from a MIMO antenna array to a base station is illustrated in Figure 10 as an example. As shown in Figure 10, the method include following steps 1001-1004.

In step 1001, N signals having the same frequency are modulated.

In uplink transmissions of signals, the N signals having the same frequency may be sent by the MIMO antenna array.

Subjects performing this step may be various devices such as an amplifier.

In practices, before modulating signals, a low-noise amplifier stage may be disposed to ensure that the SNR of signals to be modulated is satisfying.

Specific modulating operations are similar to those in the first embodiment, and thus are not described again here.

In step 1002, the modulated N signals having different frequencies are transmitted to the same feeder distribution system for transmitting.

In upward transmission of signals, in order to ensure that equilibrious power of the modulated N signals having different frequencies, an output power adjustment is realized through gain adjustment within a defined gain range so that the power difference between any two of the N adjusted signals is less than the preset value, before combing and sending the signals to the same feeder distribution system for transmitting. In particular, the preset value may be up to 2dB in this embodiment.

In step 1003, the N signals transmitted via the feeder distribution system are demodulated.

Subjects performing this step may be various devices such as an amplifier.

Specific modulating operations are similar to those in step 1003 in the second embodiment, thus are not described again here.

In step 1004, the N signals having the same frequency are sent to the base stations, respectively.

Preferably, a step 1003' is further included between the steps 1003 and 1004.

In the step 1003', the obtained N signals having the same frequency are amplified.

Specific modulating operations of the step 1003' are similar to those in the first embodiment, and thus are not described again here.

The method provided in the fourth embodiment is applicable to both a TDD-LTE system and a FDD-LTE system, and also applicable to other wireless communication systems using MIMO technologies for indoor-distribution. For the TDD-LTE system, synchronization signals may be used to control the switching to a corresponding uplink or downlink processing channel for processing. For the FDD-LTE system, a duplexer may be used to automatically separate uplink and downlink signals according to frequencies. The modulation/modulation mentioned in the description of the present invention refer to frequency-conversion and reversed frequency-conversion on a signal, i.e., frequency-converting a signal carrier frequency to a different frequency and reversedly frequency-converting the signal carrier frequency from the converted frequency to the original frequency.

Embodiments of the present invention, which are based on an LTE network, simply and easily implement the FDD-LTE MIMO technology and TD-LTE MIMO technology to fully take advantage of the LTE technology, by adding an active access host to the existing indoor-coverage system and substituting an original indoor-coverage antenna by an active access slave without making any change to the cabling of the existing indoor-coverage system, thereby significantly improving the quality of an indoor signal distribution and reducing the construction cost.

The preferred embodiments of the invention have been described as above, but are not intended to limit the scope of the invention. To those skilled in this art, the present invention may have various modifications and changes. Any modification falls into the scope of the invention. Therefore, the scope of the invention is defined by the appended claims.

## Claims

1. A method for transmitting MIMO signals, comprising:
modulating N downlink signals having the same frequency into N downlink signals having different frequencies; and
combining and then sending the N downlink signals having different frequencies obtained from the modulation to the same feeder distribution system for transmitting;
wherein, N is a positive integer not less than 2.

2. The method of claim 1, further comprising:
dividing and then demodulating the N downlink signals having different frequencies transmitted via the feeder distribution system into N signals having the same frequency, which are respectively sent to N array elements in a MIMO antenna array for sending out.

3. The method of claim 1, wherein, before modulating N downlink signals having the same frequency into N downlink signals having different frequencies, the method further comprises:
maintaining constant power of each of the N downlink signals having the same frequency, through amplifying the N downlink signals having the same frequency.

4. The method of claim 1 or 2, wherein, the downlink signals are TD-LTE downlink signals or FDD-LTE downlink signals.

5. The method of claim 1, wherein, the downlink signals are TD-LTE downlink signals; and modulating N downlink signals having the same frequency into N downlink signals having different frequencies comprises:
synchronously beginning to modulate the N downlink signals having the same frequency which are sent by base stations into the N downlink signals having different frequencies, according to a synchronization signal acquired from a predetermined synchronization signal source.

6. The method of claim 2, wherein, before sending the N signals having the same frequency to the N array elements in the MIMO antenna array respectively, the method further comprises:
amplifying the N signals having the same frequency obtained after the demodulation;
wherein sending the N signals having the same frequency to the N array elements in the MIMO antenna array respectively comprises: sending the amplified N signals having the same frequency to the N array elements in the MIMO antenna array, respectively

7. The method of claim 2, wherein, demodulating the divided N downlink signals into N signals having the same frequency particularly comprises:
demodulating the divided N downlink signals into N signals having the same frequency, by using a local oscillator signal acquired from a predetermined a local oscillator signal source as a frequency reference for signal demodulation.

8. The method of claim 2, wherein, demodulating the divided N downlink signals into N signals having the same frequency particularly comprises:
synchronously beginning to demodulate the divided N downlink signals into N signals having the same frequency, according to a synchronization signal acquired from a predetermined synchronization signal source.

9. A method for transmitting MIMO signals, comprising:
receiving N uplink signals having the same frequency which are respectively sent by N array elements in a MIMO antenna array;
modulating the received N uplink signals having the same frequency into N uplink signals having different frequencies; and
combining and then sending the N uplink signals having different frequencies obtained from the modulation to the same feeder distribution system for transmitting;
wherein, N is a positive integer not less than 2.

10. The method of claim 9, further comprising:
receiving the N uplink signals having different frequencies transmitted via the same feeder distribution system; and
dividing and then demodulating the received N uplink signals having different frequencies into N signals having the same frequency, which are sent to base stations, respectively.

11. The method of claim 9, wherein, before modulating the received N uplink signals having the same frequency into N uplink signals having different frequencies, the method further comprises:
adjusting the power of each of the received N uplink signals having the same frequency to a preset value.

12. The method of claim 9, wherein, before sending the modulated N signals having different frequencies to the same feeder distribution system for transmitting, the method further comprises:
adjusting a power difference between any two of the N uplink signals having different frequencies to be less than a preset value, through amplifying the N uplink signals having different frequencies obtained from the modulation;
wherein combining and then sending the N uplink signals having different frequencies obtained from the modulation to the same feeder distribution system for transmitting particularly comprises: combining and then sending the amplified N uplink signals having different frequencies to the same feeder distribution system for transmitting.

13. The method of claim 9 or 10, wherein, the uplink signals are TD-LTE downlink signals or FDD-LTE downlink signals.

14. The method of claim 9 or 10, wherein, the uplink signals are TD-LTE uplink signals; and modulating the received N uplink signals having the same frequency into N uplink signals having different frequencies particularly comprises: synchronously beginning to modulate the received N uplink signals having the same frequency into N uplink signals having different frequencies, according to a synchronization signal acquired from a predetermined synchronization signal source.

15. The method of claim 10, wherein, before sending the N signals having the same frequency to base stations respectively, the method further comprises:
amplifying the N signals having the same frequency obtained after the demodulation;
sending the N signals having the same frequency to the base stations respectively particularly comprises: sending the amplified N signals having the same frequency to the base stations respectively.

16. A device for transmitting MIMO signals, comprising at least N-1 first frequency-mixing circuits and a multi-band combiner, wherein:
each of the first frequency-mixing circuits is configured to modulate one of N downlink signals having the same frequency which are sent by base stations, to obtain N downlink signals different in frequency after the modulation by the first frequency-mixing circuits;
the multi-band combiner is configured to combine and then send the N downlink signals having different frequencies obtained after the modulation by the at least N-1 first frequency-mixing circuits to the same feeder distribution system for transmitting;
wherein, N is a positive integer not less than 2.

17. The device of claim 16, further comprising at least N-1 second amplifiers, wherein, each of the first frequency-mixing circuits is connected to the base station through one of the second amplifiers;
each of the second amplifiers is configured to amplify one of the N downlink signals having the same frequency sent by the base stations, to maintain power of the downlink signal constant;
each of the first frequency-mixing circuits is configured to modulate one downlink signal amplified by its connected second amplifier.

18. The device of claim 16, wherein, the uplink signals are TD-LTE downlink signals or FDD-LTE downlink signals.

19. The device of claim 18, wherein, the downlink signals are TD-LTE downlink signals; and the device further comprises a synchronization unit for acquiring a synchronization signal from a predetermined synchronization signal source;
each of the first frequency-mixing circuits is configured to synchronously begin modulating one of the N downlink signals having the same frequency sent by the base stations, according to the synchronization signal.

20. A device for transmitting MIMO signals, comprising at least N-1 second frequency-mixing circuits and a multi-band combiner, wherein:
the multi-band combiner is configured to receive and then divide N uplink signals having different frequencies transmitted via the same feeder distribution system, and send at least N-1 of the divided N uplink signals having different frequencies to the respective ones of the at least N-1 second frequency-mixing circuits;
each second frequency-mixing circuit is configured to demodulate one uplink signal sent by the multi-band combiner and to deliver the demodulated uplink signal to a base station, wherein N uplink signals obtained after the demodulation by the various second frequency-mixing circuits have the same frequency;
wherein, N is a positive integer not less than 2.

21. The device of claim 20, wherein, the device further comprises at least N-1 first amplifiers, wherein, each of the second frequency-mixing circuits is connected to the base station through one of the first amplifiers;
each of the first amplifiers is configured to amplify an uplink signal modulated by its connected second frequency-mixing circuit and deliver the amplified uplink signal to the base station.

22. A device for transmitting MIMO signals, comprising at least N-1 first frequency-mixing circuits and a multi-band combiner, wherein:
the multi-band combiner is configured to receive and then divide the N downlink signals having different frequencies transmitted via the same feeder distribution system, and send at least N-1 of the divided N downlink signals having different frequencies to the respective ones of the at least N-1 first frequency-mixing circuits;
each first frequency-mixing circuit is configured to demodulate one of downlink signals sent by the multi-band combiner and to deliver the demodulated downlink signal to one array element in a MIMO antenna array, wherein N downlink signals obtained after the demodulation by the various first frequency-mixing circuits have the same frequency;
wherein, N is a positive integer not less than 2.

23. The device of claim 22, further comprising at least N-1 first power amplifiers, wherein, each first frequency-mixing circuit is connected to one array element in a MIMO antenna array through one of the first power amplifiers;
each of the first amplifiers is configured to amplify a downlink signal demodulated by its connected first frequency-mixing circuit and deliver the amplified downlink signal to the one array element in a MIMO antenna array.

24. A device for transmitting MIMO signals, comprising at least N-1 second frequency-mixing circuits and a multi-band combiner, wherein:
each second frequency-mixing circuit is configured to modulate one of N uplink signals having the same frequency which are sent by an array element in a MIMO antenna array, to obtain N uplink signals different in frequency from the modulation by the various second frequency-mixing circuits;
the multi-band combiner is configured to combine and then send the N uplink signals having different frequencies obtained after the modulation by the at least N-1 second frequency-mixing circuits to the same feeder distribution system for transmitting;
wherein, N is a positive integer not less than 2.

25. The device of claim 24, further comprising at least N-1 low-noise amplifiers, wherein, each second frequency-mixing circuit is connected to one array element in a MIMO antenna array through one of the low-noise amplifiers.
each low-noise amplifier is configured to amplify one uplink signal received from its connected antenna array element, to adjust the power of the uplink signal to a preset value;
each second frequency-mixing circuit is configured to modulate an uplink signal amplified by its connected low-noise amplifier.

26. The device of claim 25, further comprising at least N-1 second power amplifiers, wherein, each second frequency-mixing circuit is connected to the multi-band combiner through one of the second power amplifiers;
each second power amplifier is configured to amplify an uplink signal obtained after the modulation by its connected second frequency-mixing circuit, wherein, a power difference between any two of the N uplink signals having different frequencies and amplified by different power amplifiers is less than the preset value;
the multi-band combiner is configured to combine and then send the N uplink signals having different frequencies amplified by the at least N-1 second frequency-mixing circuits to the same feeder distribution system for transmitting.

27. A device for transmitting MIMO signals, comprising N-1 host frequency-converting modules and a multi-band combiner-divider;
the host frequency-converting module is configured to frequency-convert a downlink signal inputted from a corresponding RRU port into a signal having a frequency different from that of every other downlink signal and transmit the frequency-converted downlink signal to the multi-band combiner-divider; and further configured to reversedly frequency-convert an uplink signal from the multi-band combiner-divider and having a frequency different from that of every other uplink signal into a signal having the same frequency so as to be transmitted to the RRU port;
wherein, different host frequency-converting modules correspond to different frequency-converting frequencies, output frequency-converted downlink signals having different frequencies, and process uplink signals having different frequencies;
the multi-band combiner-divider is configured to combine N-1 downlink signals having different frequencies and a downlink signal not subjected to frequency-conversion into one signal to be inputted to a feeder distribution system so as to be transmitted to an active access slave, and further configured to divide uplink signals from the feeder distribution system according to frequencies, and then output the divided uplink signals to corresponding host frequency-converting modules for processing;
wherein, N is a positive integer not less than 2.

28. The device of claim 27, wherein, the MIMO signals are TD-LTE signals or FDD-LTE signals.

29. The device of claim 27, wherein, the host frequency-converting module comprises a first frequency-converting circuit, a second frequency-converting circuit, and a first uplink/downlink signal separation means and a second uplink/downlink signal separation means connected to both ends of the first frequency-converting circuit and the second frequency-converting circuit;
the first frequency-converting circuit comprises a first amplifier (833) and a first frequency-mixing circuit (834) and is configured to frequency-convert a downlink signal;
the second frequency-converting circuit comprises a second frequency-mixing circuit (836) and a second amplifier and is configured to reversedly frequency-convert an uplink signal;
the first uplink/downlink signal separation means and the second uplink/downlink signal separation means are configured to separate uplink and downlink signals, send the downlink signal to the first frequency-converting circuit for outputting and send the uplink signal to the second frequency-converting circuit for outputting.

30. The device of claim 29, wherein, the first uplink/downlink signal separation means and the second uplink/downlink signal separation means are high speed switches or duplexers.

31. A device for transmitting MIMO signals, comprising a multi-band combiner-divider, N-1 slave frequency-converting modules and N antennas;
wherein, each slave frequency-converting module corresponds to a distinct signal frequency;
the multi-band combiner-divider is configured to divide signals from the feeder distribution system according to frequencies and then output the divided signals to corresponding slave frequency-converting modules for processing, and further configured to combine uplink signals from N-1 slave frequency-converting modules with an uplink signal from an antenna, which have different frequencies, into one signal to be outputted to a radio frequency distribution system for transmitting;
the slave frequency-converting module is configured to reversedly frequency-convert downlink signals from the multi-band combiner-divider, which are different from each other in frequency, into downlink signals having the same transmitting frequency to be transmitted by an antenna (53), and further configured to frequency-convert uplink signals having the same frequency received by the antenna into corresponding uplink signals which are different from each other in frequency, which are transmitted to the multi-band combiner-divider for combining;
wherein, N is a positive integer not less than 2.

32. The device of claim 31, wherein, the MIMO signals are TD-LTE signals or FDD-LTE signals.

33. The device of claim 31, wherein, the slave frequency-converting module comprises a third frequency-converting circuit, a fourth frequency-converting circuit, and a third uplink/downlink signal separation means and a fourth uplink/downlink signal separation means connected to both ends of the third frequency-converting circuit and the fourth frequency-converting circuit;
the third frequency-converting circuit comprises a third frequency-mixing circuit and a third amplifier and is configured to reversedly frequency-convert a downlink signal;
the fourth frequency-converting circuit comprises a low-noise amplifier, a fourth frequency-mixing circuit and a fourth amplifier and is configured to frequency-convert an uplink signal received by an antenna array element;
the third uplink/downlink signal separation means and the fourth uplink/downlink signal separation means are configured to send the downlink signal to the third frequency-converting circuit for outputting and send the uplink signal to the fourth frequency-converting circuit for outputting, respectively.

34. The device of claim 33, wherein, the third uplink/downlink signal separation means and the fourth uplink/downlink signal separation means are high speed switches or duplexers.

35. A system for transmitting MIMO signals, comprising a feeder distribution system, an active access host connected to base stations and the feeder distribution system, and an active access slave connected to the feeder distribution system and a MIMO antenna array, wherein:
the active access host is configured to modulate N downlink signals having the same frequency sent by base stations into N downlink signals having different frequencies, and combine and then send the N downlink signals having different frequencies obtained from the modulation to the feeder distribution system for transmitting; and further configured to receive the N uplink signals having different frequencies transmitted via the same feeder distribution system, divide and then demodulate the received N uplink signals having different frequencies into N uplink signals having the same frequency, and deliver the N uplink signals having the same frequency obtained after the demodulation to base stations;
the feeder distribution system is configured to transmitting signals between the active access host and the active access slave;
the active access slave is configured to receive the N downlink signals having different frequencies transmitted via the feeder distribution system, divide and then demodulate the N downlink signals having different frequencies into N downlink signals having the same frequency, and deliver the N downlink signals having the same frequency obtained after the demodulation to different array elements in a MIMO antenna array, respectively; and further configured to modulate N uplink signals having the same frequency received by N array elements in the MIMO antenna array into N uplink signals having different frequencies, and combine and then send the N uplink signals having different frequencies to the feeder distribution system for transmitting;
wherein, N is a positive integer not less than 2.

36. A system for transmitting MIMO signals, comprising a feeder distribution system, an active access host connected to one end of the feeder distribution system, and multiple active access slaves connected to the other end of the feeder distribution system, wherein the active access host and the active access slaves are configured to transmit N MIMO uplink/downlink signals in parallel;
the active access host is configured to, when transmitting the downlink signals, frequency-convert N-1 downlink signals into signals having different frequencies, and transmit the signals having different frequencies via the feeder distribution system to the active access slaves, which reversedly frequency-convert the frequency-converted downlink signals to the same frequency for transmission;
the active access slaves are configured to, when transmitting the uplink signals, frequency-convert N-1 uplink signals into signals having different frequencies, and transmit the signals having different frequencies via the feeder distribution system to the active access host, which reversedly frequency-converts the uplink signals to the same frequency for transmission to the base stations.
